# EUROPÄISCHE PATENTSCHRIFT

(11) **EP 4 323 658 B1**
(45) Veröffentlichungstag und Bekanntmachung des Hinweises auf die Patenterteilung: **11.06.2025**
(21) Anmeldenummer: 22721760.1
(22) Anmeldetag: 08.04.2022
(51) Int. Cl.: F16C 17/00, F16C 17/24, F16C 29/00, F16C 29/02

(54) **GLEITLAGERANORNDUNG MIT SCHIENE UND SCHLITTEN**
SLIDING ARRANGEMENT WITH RAIL AND SLIDE
AGENCEMENT DE GLISSAGE AVEC RAIL ET CAISSE

(30) Priorität: 12.04.2021 DE 202021101946 U
(43) Veröffentlichungstag der Anmeldung: 21.02.2024
(73) Patentinhaber: igus GmbH, 51147 Köln (DE)
(72) Erfinder: KÖCHING, Fabian, 50679 Köln (DE)
(74) Vertreter: Lippert Stachow Patentanwälte Rechtsanwälte
(86) Internationale Anmeldenummer: PCT/EP2022/059515
(87) Internationale Veröffentlichungsnummer: WO 2022/218875

(56) Entgegenhaltungen:
- DE-U1- 202004 016 094
- DE-U1- 202018 105 755
- US-A1- 2019 145 462

## Beschreibung

Die Erfindung betrifft eine Gleitlageranordnung umfassend eine im Wesentlichen gerade Schiene und einen darauf in Längsrichtung der Schiene verschiebbaren Schlitten, der von einem Führungsabschnitt an der Schiene geführt wird, sowie den Schlitten einer solchen Gleitlageranordnung und ein Verfahren zur Herstellung eines solchen Schlittens.

Eine solche Gleitlageranordnung wird überall dort benötigt, wo ein mechanisches Element mit möglichst geringem Aufwand an Zeit und Energie längs einer im Wesentlichen geraden Linie bewegt werden soll, beispielsweise auf den Gebieten automatische Fertigung, Werkstoffmaschinen, Messmaschinen, Medizintechnik, Abfüllen und Verpacken. Dabei gleiten Flächen eines führenden Bauteils (Schiene) auf Flächen des bewegt geführten Bauteils (Schlitten), vorzugsweise ohne zusätzliche Schmiermittel. Selbstverständlich ist dabei das führende Bauteil bzw. die Schiene in Längsrichtung wesentlich länger als das geführte Bauteil bzw. der Schlitten, damit eine sinnvolle Anordnung realisiert ist, wobei dies üblicherweise etwa dadurch gewährleistet sein kann, dass die Schiene eine Erstreckungslänge in Längsrichtung aufweist, die mindestens das Fünffache der Erstreckungslänge des Schlittens in Längsrichtung beträgt. Bei einer bestimmungsgemäßen Verwendung ist die Schiene meist mit einer Fixierseite, die insbesondere eine dem Schlitten abgewandten Seite ist, an einer Vorrichtung, beispielsweise einer Wand oder einer Maschine, fixiert, während der Schlitten relativ zu der Schiene und somit relativ zu der Vorrichtung durch die Schiene linear geführt beweglich ist. Die Fixierseite weist üblicherweise einen ebenen Flächenabschnitt auf, der zur Anlage an der Vorrichtung bei der genannten bestimmungsgemäßen Verwendung ausgebildet ist. Der ebene Flächenabschnitt kann durchgehend sein oder voneinander beabstandete Unterabschnitte aufweisen, bevorzugt bildet der ebene Flächenabschnitt mindestens 50 % der Fläche der Fixierseite aus. Die Schiene weist üblicherweise einen zylindrischen Führungsabschnitt auf, der versetzt zu der Fixierseite angeordnet ist. Die angewendeten Materialpaarungen der Gleitflächen sind meist Metall-Kunststoff oder Kunststoff-Kunststoff. Lineargleitlageranordnungen haben sich häufig als vorteilhafte Alternative zu Linearkugellagern erwiesen. Bei gattungsgemäßen Gleitlageranordnungen weist der Schlitten üblicherweise eine Montageseite auf, auf der bestimmungsgemäß eine Arbeitsvorrichtung, beispielsweise ein in einer Längsrichtung linear zu verschiebendes Bauteil von Maschinen, anzuordnen und zu befestigen ist. Bevorzugt mündet in die Montageseite ein Befestigungskanal, der senkrecht zur Längsrichtung durch den Schlittenkörper verläuft, wobei durch den Befestigungskanal ein Befestigungsmittels geführt werden kann, beispielsweise eine Schraube, die bei einer bestimmungsgemäßen Verwendung der Gleitlageranordnung mit ihrem Schraubkopf an eine der Montageseite gegenüberliegende Seite des Schlittenkörpers presst und in die Arbeitsvorrichtung geschraubt ist. Bevorzugt weist die Montageseite eine ebene Montagefläche auf, in die bevorzugt der Befestigungskanal mündet. Häufig ist der Schlitten im Wesentlichen quaderförmig, wobei eine der Seiten des quaderförmigen Schlittens als die Montageseite ausgebildet ist. In dem Schlittenkörper ist eine in Längsrichtung durch den Schlittenkörper durchlaufende Durchführung zur Aufnahme eines zylindrischen Führungsabschnitts der Schiene vorgesehen. Die Durchführung läuft bei einer quaderartigen Ausgestaltung des Schlittens bevorzugt parallel zu vier der sechs Seiten des Quaders bzw. zumindest zu der bevorzugt vorgesehenen ebenen Montagefläche und insbesondere senkrecht zum Befestigungskanal, wobei der Befestigungskanal in einer Querrichtung versetzt zu der Durchführung vorgesehen und somit von der Durchführung beabstandet ist.

Bekannt sind Gleitlageranordnungen mit Schienen und Schlitten aus Metall, wobei durch den Körper des Schlittens eine Durchführung für die Aufnahme eines Führungsabschnitts der Schiene hindurch verläuft, deren Innenfläche durch ein Gleitelement aus Kunststoff ausgebildet ist. Die DE 20 2018 105 755 U1 offenbart ein Beispiel für ein solches Gleitelement in einer Gleitlageranordnung. Ähnliche Gleitlageranordnungen aus Schienen und Schlitten werden von der Anmelderin unter der Marke drylin vertrieben. Die Schlittenkörper können dabei aus Zinkdruckguss, Aluminium oder Edelstahl bestehen. Für die Gleitelemente ist ein spezieller Gleitwerkstoff vorgesehen. Das Gleitelement liegt an dem Schlittenkörper an unter Ausbildung der Durchführung. Entsprechend weist der Schlittenkörper einen Durchführungskanal auf, in dem das Gleitelement und die Durchführung angeordnet sind, wobei das Gleitelement an der Innenseite des Durchführungskanals anliegt. Mit der Herstellung solcher Gleitlageranordnungen geht über die Herstellung und den Zusammenbau der verschiedenen Komponenten ein entsprechender Aufwand einher.

Bei Betrachtung des Energieverbrauchs und des Verschleißes beim Betrieb solcher Gleitlageranordnungen ist zu bedenken, dass der mit dem zu verschiebenden Element verbundene Schlitten lediglich ein Hilfsmittel darstellt. Insbesondere, wenn seine Masse einen wesentlichen Anteil an der insgesamt verschobenen Masse hat, verursacht sie auch einen wesentlichen Anteil am Energieverbrauch, beispielsweise zum Beschleunigen und Abbremsen und auch zur Flächenpressung der Gleitflächen, die für den Verschleiß maßgeblich ist.

Die bekannten Gleitlageranordnungen zeigen ein unvermeidliches Maß an Verschleiß des Gleitelements. Wird dieser nicht rechtzeitig bemerkt, kann es zu Metall-Metall-Kontakten mit entsprechend stärkerer Reibung und Beschädigung des Schlittenkörpers kommen. In diesem Fall muss der Schlitten ausgebaut und das verschlissene Gleitelement, unter Umständen auch der beschädigte metallene Schlittenkörper, ersetzt werden. Je nachdem, wie häufig dies geschieht, wird die Produktivität des entsprechenden Prozesses beeinträchtigt.

Aus der DE 20 2004 016 094 U1 ist eine Gleitlageranordnung nach Oberbegriff des Anspruchs 1 bekannt. Weiterer Stand der Technik ist aus der US 2019/145642 A1 bekannt.

Der vorliegenden Erfindung liegt die Aufgabe zugrunde, eine Gleitlageranordnung und einen Schlitten zu schaffen, die bzw. der zumindest einen Nachteil gattungsgemäßer Gleitlageranordnungen bzw. gattungsgemäßer Schlitten zumindest teilweise behebt, bei der insbesondere Energieverbrauch und Verschleiß vermindert werden und die Produktivität verbessert ist.

Als eine Lösung der der Erfindung zugrunde liegenden Aufgabe schlägt die Erfindung eine Gleitlageranordnung mit den Merkmalen gemäß Anspruch 1 vor.

Die erfindungsgemäße Gleitlageranordnung umfasst eine Schiene und einen Schlitten. Die Schiene weist einen in einer Längsrichtung langgestreckten Schienenkörper auf, an dessen einer Querseite ein zylindrischer Führungsabschnitt vorgesehen ist, der über einen Stegabschnitt der Schiene mit dem Schienenkörper verbunden ist. Die Querseite ist eine entlang der Längsrichtung verlaufende, den Schienenkörper in einer senkrecht zur Längsrichtung verlaufenden Querrichtung begrenzende Seite. Der Schlitten weist einen Schlittenkörper auf, durch den hindurch eine zu dem Führungsabschnitt korrespondierende zylindrische Durchführung zur Aufnahme des Führungsabschnitts verläuft. Der Schlittenkörper weist einen mit der Durchführung verbundenen, zu dem Stegabschnitt korrespondierenden Längsschlitz zur Aufnahme des Stegabschnitts auf. Der Schlittenkörper ist bevorzugt nach Art eines Quaders ausgebildet. In dem bestimmungsgemäßen Zustand der Gleitlageranordnung tritt somit der Steg ausgehend von dem in der Durchführung angeordneten Führungsabschnitt durch den Längsschlitz hindurch zu dem Schienenkörper. Der Schienenkörper ist bevorzugt nach Art eines Quaders ausgestaltet. Bevorzugt ist der Führungsabschnitt an einer Kante des quaderförmigen Schienenkörpers angeordnet. Durch das Vorsehen der Durchführung und des mit der Durchführung verbundenen Längsschlitzes kann der Schlitten an der Schiene in Längsrichtung gleitend entlang bewegt werden, während der Führungsabschnitt in der Durchführung angeordnet ist und in der Durchführung an dem Schlitten entlanggleitet und der Stegabschnitt in dem Längsschlitz angeordnet ist und in dem Längsschlitz positioniert relativ zu dem Schlitten verschoben wird. Die Innenseite der Durchführung, mit der in dem bestimmungsgemäßen Betriebszustand der Gleitlageranordnung der Schlitten in Längsrichtung gleitend an dem Führungsabschnitt anliegt, ist durch ein Gleitelement aus einem Gleitwerkstoff ausgebildet. Erfindungsgemäß ist der Schlittenkörper gemeinsam mit dem Gleitelement als einstückiges Schlittenteil aus Kunststoff hergestellt, wobei zumindest die Innenseite der Durchführung durch ein Tribopolymer gebildet ist und wobei insbesondere mindestens 80 Vol.-% des Schlittenteils, d. h. mindestens 80% des Volumens des durch den Schlittenkörper und das Gleitelement gebildeten Schlittenteils, mit einer Faserverstärkung versehen ist. Bevorzugt ist der Kunststoff ein Polymerkunststoff, bevorzugt ist der Kunststoff ein Gleitwerkstoff. Besonders bevorzugt ist der gesamte Schlitten einstückig, insbesondere in einem durchgehenden Herstellungsschritt, aus Kunststoff hergestellt. Besonders bevorzugt ist der Schlitten insgesamt durchgehend aus einem selben Kunststoff hergestellt, insbesondere aus einem Tribopolymer. Das Schlittenteil lässt sich in einen Bereich des Schlittenkörpers und in einen Bereich des Gleitelements einteilen. Der Bereich des Gleitelements ist der Bereich des Schlittenteils, der die Innenseite der Durchführung ausbildet und sich ausgehend von der Innenseite über eine von der Innenseite in das Schlittenteil hineinragende Schichtdicke erstreckt, die bevorzugt 0,5 mm bis 2 mm beträgt. Das Schlittenteil besteht bevorzugt aus dem Bereich des Schlittenkörpers und dem Bereich des Gleitelements. An der Innenseite der Durchführung sind bevorzugt in Längsrichtung verlaufende Längsnuten bzw. Rillen ausgebildet, damit die Anlagefläche des Schlittens bzw. Gleitelements in dem bestimmungsgemäßen Betriebszustand an dem Führungsabschnitt reduziert sein kann und insbesondere eine Reiberhöhung durch Verschmutzung nach Möglichkeit verhindert werden kann. Der Bereich des Gleitelements ist bevorzugt durch die Nutwände definiert. Der Bereich des Gleitelements ist als der Bereich vorgesehen, in dem bestimmungsgemäß auch bei einem Verschleiß noch eine Gleitreibung zwischen Schlitten und Führungsabschnitt der Schiene erwartet ist.

Unter Gleitwerkstoff für die Herstellung des erfindungsgemäßen Schlittens sind dabei thermoplastische Polymere mit geringem Reibungskoeffizienten für Haft- und Gleitreibung gegenüber Metall- und Kunststoffoberflächen wie Polyethylen, Polyoxymethylen (Polyacetal), Polypropylen, Polyvinylchlorid, Polyethylenterephthalat, und auch duroplastische Polymere wie Epoxidharze zu verstehen. Zur weiteren Verminderung von Reibung und Verschleiß können diesen Matrixpolymeren geeignete Schmiermittel, beispielsweise Silikonöle oder fluorierte Ethylenpolymere zugegeben werden. Diese Schmiermittel können je nach ihrer Art sowohl homogen mit dem Matrixpolymer vermischt oder in demselben gelöst sein als auch als heterogene Phase fein verteilt beigemischt sein. Im letzteren Falle beträgt die Teilchengröße der heterogenen Phase zweckmäßig 0,01-10 µm.

Eine weitere Verminderung von Reibung und Verschleiß erzielt man durch Beimischung von feinteiligen Feststoffschmiermitteln zu den beschriebenen Gleitwerkstoffen, allein oder in Kombination mit den oben genannten Schmiermitteln. Solche Werkstoffe werden hier als Tribopolymere bezeichnet. Geeignet sind dafür Feststoffe mit kristalliner Schichtstruktur wie Graphit, Molybdändisulfid, Molybdäntrioxid, Wolframdisulfid, (hexagonales) alpha-Bornitrid und Einlagerungsverbindungen dieser Stoffe. Auch anorganische Verbindungen wie Calciumfluorid und Cerfluorid kommen infrage. Die Teilchengröße der Feststoffschmiermittel liegt zweckmäßig zwischen 0,01 und 50 µm. Dem Gleitwerkstoff, insbesondere einem als Tribopolymer ausgebildeten Gleitwerkstoff, können zur Verstärkung Fasern beigemischt sein. Unter Faserverstärkung ist die Einlagerung von geeigneten Fasern in die Matrixpolymere zu verstehen. Diese Fasern bestehen aus geeigneten Materialien ausreichender Festigkeit und ausreichender Bindung zum Matrixpolymer. Geeignet sind beispielsweise Fasern aus Glas, Kohlenstoff, Aramid, Polyester, Polyamid. In Hinblick auf die Verarbeitbarkeit ist die Länge dieser Fasern bevorzugt 0,1-10 mm. Der Faserdurchmesser liegt zweckmäßig zwischen 5 und 25 µm, der Faseranteil im mit einer Faserverstärkung versehenen Werkstoff zweckmäßig zwischen 5 und 50 Volumenprozent.

Die Schiene der erfindungsgemäßen Gleitlageranordnung weist einen zylindrischen Führungsabschnitt auf, der über einen Stegabschnitt mit dem Schienenkörper verbunden ist. Die Länge und Dicke dieses Stegabschnitt richtet sich nach der speziellen Geometrie der Umgebung und nach der geforderten Stabilität. Der Stegabschnitt kann allgemein in dem Schienenkörper integriert sein und bezeichnet den Übergang von dem Schienenkörper zu dem Führungsabschnitt. In jedem Fall muss die zylindrische Durchführung einen Längsschlitz aufweisen, in dem der Stegabschnitt in der Längsrichtung bewegt werden kann, und über diesen durch den Längsschlitz hindurchtretenden Stegabschnitt ist der Führungsabschnitt mit dem Schienenkörper verbunden. Die Breite des Längsschlitzes richtet sich nach der Stärke des Stegabschnitt. Dieser ist bevorzugt so bemessen, dass der Längsschlitz weniger als ein Viertel des Umfangs der Durchführung aufweist.

Der erfindungsgemäße Schlitten der Gleitlageranordnung besteht nun also nicht mehr aus zwei Bauteilen, die bei der Montage miteinander verbunden werden müssen, sondern aus einem Bauteil, dem Schlittenteil, welches die Eigenschaften von Schlittenkörper und Gleitelement dort, wo sie wichtig sind, in sich integriert aufweist. Dies ist einmal die Innenfläche der Durchführung, bei der es auf geringe Reibung und hohe Verschleißfestigkeit ankommt, zum anderen der Schlittenkörper, der eine ausreichende Festigkeit und bevorzugt geringe Masse aufweisen muss, um die im Betrieb daran befestigten mechanischen Elemente tragen zu können. Die kennzeichnenden Merkmale des Hauptanspruchs tragen dieser Notwendigkeit Rechnung. Demgemäß ist am erfindungsgemäßen Schlitten der Bereich des Gleitelements etwa 0,5-5 mm dick und an die Innenfläche der Durchführung angrenzend von dem Bereich des Schlittenkörpers, der dem um den Bereich des Gleitelements verminderte Volumen des Schlittens entspricht, zu unterscheiden.

Die Schiene der erfindungsgemäßen Gleitlageranordnung ist bevorzugt eingerichtet, um an einer Unter- oder Tragkonstruktion befestigt zu werden. Hierzu können zum Beispiel Löcher vorgesehen sein, durch die Schrauben in die Unterkonstruktion eingeschraubt werden.

Bei einer bevorzugten Ausführungsform ist der ganze Schlitten einheitlich aus einem Gleitwerkstoff hergestellt. In diesem Fall wäre das bevorzugt ein Tribopolymer, welches auch eine Faserverstärkung umfasst. Dadurch wird der Herstellungsprozess vereinfacht.

In einer Ausführungsform weist der Bereich des Schlittenkörpers einen höheren Anteil an Fasern auf als der Bereich des Gleitelements. Der in dem Schlittenteil in Vol.-% vorgesehene Anteil an Fasern, die zur Verstärkung des Kunststoffs vorgesehen sind, aus dem das Schlittenteil hergestellt ist, variiert somit bevorzugt über das Volumen des Schlittenteils hinweg. An der Innenseite der Durchführung sind weniger Fasern pro Volumenanteil des die Innenseite ausbildenden Kunststoffs vorgesehen als in einem von der Durchführung mindestens 5 mm beabstandeten Bereich des Schlittenteils. Bevorzugt sind an der Innenseite der Durchführung keine Fasern in dem die Innenseite der Durchführung ausbildenden Kunststoff vorgesehen.

In einer Ausführungsform weist die Schiene einen zweiten Führungsabschnitt auf, der an ihrer anderen Querseite angebracht ist. Auf diese Weise können mit einer Gleitlageranordnung zwei verschiedene Transportaufgaben wahrgenommen werden, oder es kann ein Schlitten verwendet werden, der zwei passende Durchführungen aufweist und dadurch eine höhere Tragfähigkeit und eine verbesserte Stabilität bei der Verschiebung erhält. Die Durchführungen können wir zu der einen Durchführung erläutert ausgebildet bzw. realisiert sein, insbesondere kann der gesamte Schlitten mit zwei Durchführungen als ein einstückiges Schlittenteil ausgebildet sein.

Vorteilhaft sind an der Innenseite der Durchführung durchgehende Längsnuten bzw. Rillen angebracht. Dadurch wird die gleitende Fläche und potentiell die Reibung vermindert.

Der Führungsabschnitt ist bevorzugt einstückig mit dem Schienenkörper ausgeführt. Es ist aber auch möglich, den Führungsabschnitt mit dem Steg allein herzustellen und diesen dann am Schienenkörper zu befestigen, wenn dies zweckmäßig erscheint.

Der Führungsabschnitt und gegebenenfalls der Schienenkörper, bevorzugt die gesamte Schiene, bestehen bevorzugt aus einem Metall oder einer Metalllegierung, bevorzugt Aluminium oder seine Legierungen, Titan oder seine Legierungen, Magnesium oder seine Legierungen. Die Legierungsbestandteile sind bevorzugt so ausgewählt, dass sie die Festigkeit und den Widerstand gegen Verschleiß und gegebenenfalls Korrosion steigern.

Zur Erfindung gehören auch Verfahren zur Herstellung eines Schlittens für die erfindungsgemäße Gleitlageranordnung. Bevorzugt wird das Schlittenteil mittels Spritzgussverfahrens hergestellt. In einer Ausführungsform wird dazu ein geeignetes Matrixpolymer, d.h. Basispolymer, mit den gewünschten Zusätzen Schmiermittel und/oder Feststoffschmiermittel sowie insbesondere den Fasern vermischt, beispielsweise in einem Extruder, und in eine Spritzgussform injiziert. Nach dem Abkühlen kann dann das Schlittenteil als Formkörper aus der Form entnommen werden.

Um eine möglichst homogene Verteilung der Zusätze im Matrixpolymer zu erhalten, ist es zweckmäßig, nicht die reinen Zusätze, sondern deren jeweils mit Anteilen des Matrixpolymers bereitete Vormischungen für die endgültige Mischung zu verwenden.

Für eine Ausführungsform des erfindungsgemäßen Schlittens mit unterschiedlichen Materialien im Bereich des Schlittenkörpers und des Gleitelements wird bevorzugt ein Zweikomponenten-Spritzgussverfahren entsprechend angewendet. Hierzu wird zunächst eine Komponente A für den Bereich des Schlittenkörpers formuliert, welche das Matrixpolymer, die Fasern und gegebenenfalls das Schmiermittel umfasst, und eine Komponente B für den Bereich des Gleitelements mit dem entsprechenden Matrixpolymer und dem Feststoffschmiermittel. Diese beiden Komponenten werden dann in einem Zweikomponenten-Spritzgussverfahren verarbeitet. Hierfür kommen sowohl das sogenannte Einsatzspritzgießen, bei dem ein Teil, beispielsweise das Gleitelement aus der Komponente B, vorgefertigt und in die Form für den ganzen Schlitten eingesetzt wird, die dann mit der Komponente A gefüllt wird. Auch Verfahren mit verschieblichen Formteilen oder Koinjektion sind möglich. Wichtig ist, dass an der Grenzfläche zwischen beiden Komponenten eine Verschmelzung zum einstückigen Schlitten stattfindet. Dafür sind in beiden Komponenten verträgliche Matrixpolymere, vorzugsweise in beiden das gleiche Polymer zu verwenden.

Allgemein bevorzugt werden bei dem erfindungsgemäßen Verfahren zur Herstellung des Schlittens Komponenten in einem Mehrkomponenten-Spritzgussverfahren so verarbeitet, dass die Feststoffschmiermittel und/oder Schmiermittel an der Innenseite der Durchführung angereichert sind und die Verstärkungsfasern im Schlittenkörper außerhalb der Innenseite der Durchführung angereichert sind. Durch ein solches Verfahren können direkt im Herstellungsprozess in unterschiedlichen Bereichen des Schlittenteils unterschiedliche Eigenschaften des Schlittenteils realisiert werden.

Die Erfindung betrifft ferner einen Schlitten für eine erfindungsgemäße Gleitlageranordnung. Der Schlitten ist als einstückiges Schlittenteil aus Kunststoff hergestellt, das in sich integriert einen Schlittenkörper und ein aus einem Gleitwerkstoff hergestelltes Gleitelement aufweist. In dem Schlittenkörper ist eine zu einem zylindrischen Führungsabschnitt einer Schiene, die neben dem zylindrischen Führungsabschnitt einen Schienenkörper umfasst, der über einen ebenfalls von der Schiene umfassten Stegabschnitt mit dem Führungsabschnitt verbunden ist, korrespondierende zylindrische Durchführung zur Aufnahme des Führungsabschnitts vorgesehen. Der Schlittenkörper weist einen mit der Durchführung verbundenen, zu dem Stegabschnitt der Schiene korrespondierenden Längsschlitz zur Aufnahme des Stegabschnitts auf. Die Innenseite der Durchführung, mit der in einem bestimmungsgemäßen Betriebszustand der Gleitlageranordnung, d. **h.** bei einer bestimmungsgemäßen Verwendung des Schlittens, der Schlitten in Längsrichtung gleitend an dem Führungsabschnitt anliegt, ist durch das Gleitelement ausgebildet. Der erfindungsgemäße Schlitten weist bevorzugt eine Breite von 20 mm bis 40 mm, insbesondere 20 mm bis 30 mm, einer Länge von 20 mm bis 50 mm, insbesondere 25 mm bis 35 mm und eine Höhe von 10 mm bis 25 mm, insbesondere 12 mm bis 20 mm auf und wiegt dabei weniger als 20 g, insbesondere weniger als 15 g, insbesondere weniger als 12 g. Die Durchführung weist bevorzugt einen Durchmesser, d.h. einen Abstand von zwei radial gegenüberliegenden, bei einer bestimmungsgemäßen Verwendung zur Anlage an dem Führungsabschnitt vorgesehenen, von der Innenseite ausgebildeten Gleitanlageflächen, von 8 bis 15 mm, insbesondere 8 bis 12 mm auf. Insbesondere in Kombination mit zumindest einigen der vorgenannten Eigenschaften weist der Schlitten gleichzeitig in zumindest einer Belastungsrichtung eine statische Tragfähigkeit von mindestens 20 N, insbesondere mindestens 25 N auf. Die statische Tragfähigkeit ist eine Tragfähigkeit, mit der der Schlitten in der Belastungsrichtung belastet werden kann, während ein korrespondierender Führungsabschnitt in seiner Durchführung aufgenommen ist, wobei der Schlitten mit einer entsprechenden Belastung belastet zerstörungsfrei an der Schiene in Längsrichtung gleitend verschoben werden kann, während der Führungsabschnitt der Schiene in seiner Durchführung angeordnet ist und der Führungsabschnitt der Schiene in gleitender Anlage an der Innenseite der Durchführung anliegt, wobei der Schlitten die in der Belastungsrichtung aufgebrachte Belastung und somit Kraft auf den Führungsabschnitt der Schiene überträgt.

Der erfindungsgemäße Schlitten, die erfindungsgemäße Gleitlageranordnung und das erfindungsgemäße Verfahren können jeweils Merkmale aufweisen, die in verschiedenen erfindungsgemäßen Ausführungsformen zu den verschiedenen erfindungsgemäßen Lösungen beschrieben sind. Ferner können die verschiedenen erfindungsgemäßen Ausführungsformen auch Merkmale aufweisen, die im Zusammenhang mit gattungsgemäßen Ausführungsformen beschrieben sind.

Obwohl nicht bevorzugt, ist es auch möglich, Schlittenkörper und Gleitelement getrennt zu fertigen und danach fest miteinander zu verbinden, beispielsweise durch Kleben oder Schweißen.

Die erfindungsgemäße Gleitlageranordnung zeichnet sich durch eine geringere zu verschiebende Masse aus, sodass der Energieaufwand geringer wird und/oder in Fertigungslinien die Taktzahl erhöht werden kann. Außerdem ist der Wechsel des Schlittens bei der Wartung einfacher, weil nur ein Teil gewechselt wird, und die Wartungsintervalle können durch verminderten Verschleiß verlängert werden. Da der Schlittenkörper nun aus Gleitwerkstoff, sodass bei Verschleiß des Gleitelement-Bereichs immer noch gute Notlaufeigenschaften bestehen und ein überraschender Ausfall vermieden wird. Auch kann auf den Einsatz von zusätzlichem Schmiermittel verzichtet werden. Der Schlitten ist nun völlig frei von Metall und kann gut rezykliert werden. Im Betrieb ist durch die kleinere Masse die Geräuschentwicklung geringer und eine Kontamination der Umgebung durch Metallabrieb ist ausgeschlossen.

Die Erfindung wird nun anhand von Zeichnungen anhand eines Ausführungsbeispiels näher erläutert.

Es zeigen:
- Figur 1:: in einer schematischen Prinzipdarstellung eine Ausführungsform eines erfindungsgemäßen Schlittens;
- Figur 2:: in einer schematischen Prinzipdarstellung eine Schrägansicht einer Ausführunsgform einer erfindungsgemäßen Gleitlageranordnung;
- Figur 3:: in einer schematischen Prinzipdarstellung eine Seitenansicht der Ausführungsform gemäß Figur 2.

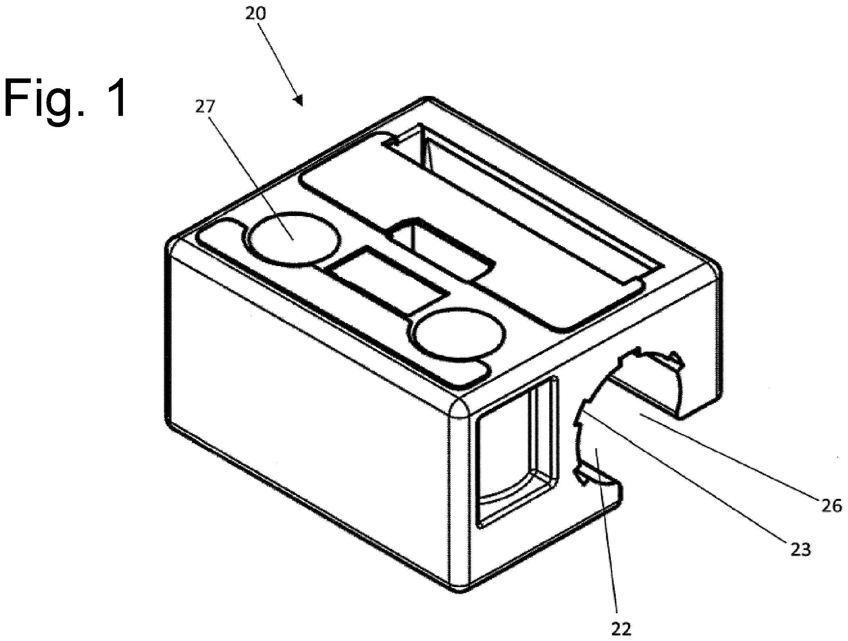

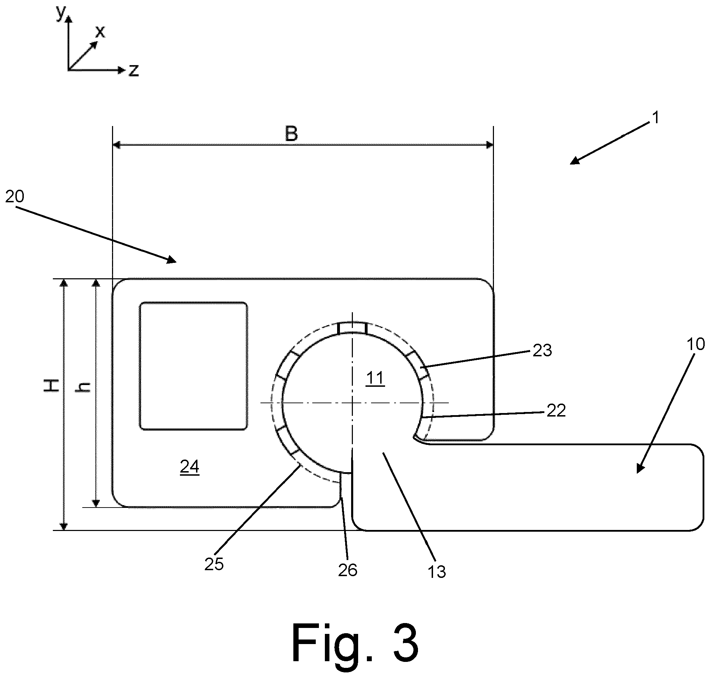

In Figur 1 ist eine Ausführungsform eines erfindungsgemäßen Schlittens 20 in einer Schrägansicht gezeigt. Aus Figur 1 ist ersichtlich, dass der Schlitten 20 einen nach Art eines Quaders ausgebildeten Schlittenkörper aufweist, durch den hindurch sich eine Durchführung 22 erstreckt. Die Durchführung 22 ist nach Art eines Zylinders ausgebildet, der sich mit seiner Zylinderachse in Längsrichtung erstreckt. Der Schlittenkörper weist ferner einen Längsschlitz 26 auf, der mit der Durchführung 22 verbunden ist. Aus insbesondere Figur 3 ist zu erkennen, dass durch den Längsschlitz 26 im bestimmungsgemäßen Zustand einer erfindungsgemäßen Gleitanordnung 1 der Stegabschnitt 13 einer Schiene hindurchtritt, der einerseits mit dem in der Durchführung 22 angeordneten Führungsabschnitt 11 und andererseits mit dem zur Montage an einem Bauelement ausgebildeten Schienenkörper 10 verbunden ist. Die Zylinderachse der Durchführung 22 erstreckt sich parallel zu vier der sechs Quaderflächen des Quaders, als der der Schlittenkörper im Wesentlichen ausgebildet ist. Der Schlitten 20 weist eine Montageseite auf, die in Figur 1 nach oben gewandt ist, durch die zwei Befestigungskanäle 27 hindurchtreten, so dass durch Befestigungsmittel, beispielsweise Schrauben, die durch die Befestigungskanäle 27 hindurchgeführt werden, eine Arbeitsvorrichtung an der Montageseite des Schlittens befestigt werden kann. Aus Figur 1 ist ferner zu erkennen, dass der Schlitten insgesamt als einstückiges Schlittenteil ausgebildet ist, das integral an der Innenseite der Durchführung ein Gleitelement ausbildet.

An der Innenseite der Durchführung sind Längsnuten 23 vorgesehen. Die mit Bezug auf die Zylinderachse der Durchführung 22 sich radial erstreckende Nuthöhe definiert den Bereich des Gleitelements, d. h. den Bereich, in dem bei einer bestimmungsgemäßen Verwendung des Schlittens 20 auch bei einem Verschleiß ein Reibkontakt zwischen Schlitten und in der Durchführung 22 angeordnetem Führungsabschnitt der Schienen vorgesehen ist.

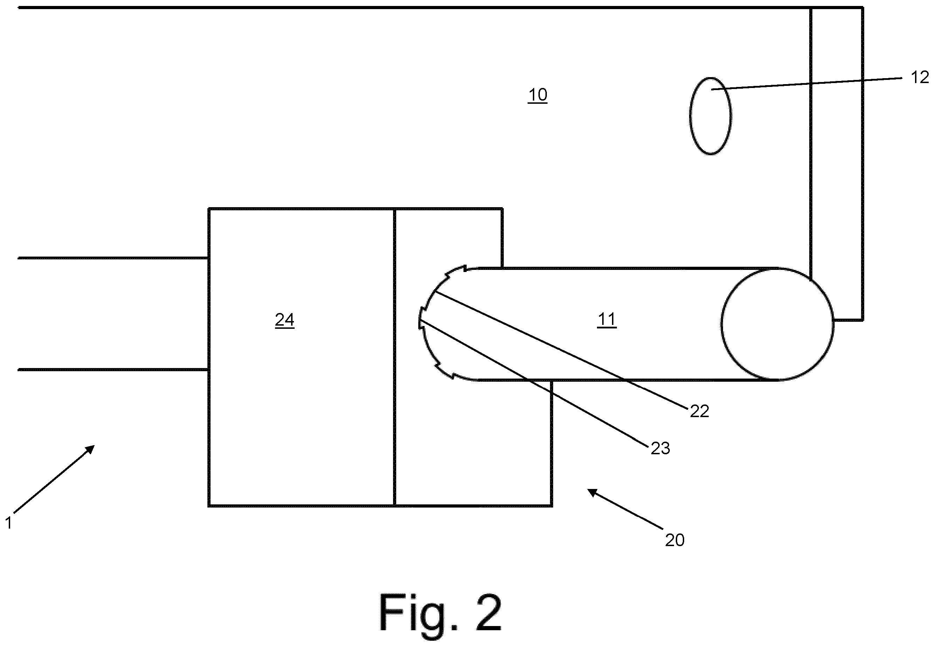

In Figur 2 ist die erfindungsgemäße Gleitlageranordnung 1 in einer schrägen Draufsicht zu sehen. Man erkennt den Schienenkörper 10 der Schiene mit dem daran angebrachten Führungsabschnitt 11. Auf dem Führungsabschnitt ist der Schlitten 20 gleitfähig aufgesteckt, wobei die zylindrische Durchführung 22 den Führungsabschnitt 11 der Schiene aufnimmt. In der Innenfläche der Durchführung 22 sind Längsnuten 23 eingelassen, um die Kontaktfläche und die Reibung zu vermindern.

Figur 3 zeigt die Gleitschienenanordnung in der Seitenansicht. Die Maßlinien beziehen sich auf das unten beschriebene Ausführungsbeispiel. Wiederum erkennt man die Schiene mit dem Schienenkörper 10 und dem Führungsabschnitt 11, die durch den Stegabschnitt 13 miteinander verbunden sind. Der Stegabschnitt 13 tritt durch den Längsschlitz 26 in der zylindrischen Durchführung 22 und nimmt weniger als ein Viertel des gesamten Umfangs der Durchführung ein. Der Bereich des Gleitelements 25 ist hier als Teil des Schlittens 20 dargestellt und nimmt etwa 0,5-5 mm des die Durchführung 22 umgebenden Volumens des Schlittens ein. Der Rest des Schlittens bildet den Bereich des Schlittenkörpers 24.

### Bezugszeichenliste

- 1: Gleitlageranordnung
- 10: Schienenkörper
- 11: Führungsabschnitt
- 12: Schraubenloch
- 13: Stegabschnitt
- 20: Schlitten
- 22: zylindrische Durchführung
- 23: Längsnuten
- 24: Bereich des Schlittenkörpers
- 25: Bereich des Gleitelements
- 26: Längsschlitz

## Patentansprüche

1. Gleitlageranordnung (1) umfassend eine Schiene und einen Schlitten (20), wobei die Schiene einen in einer Längsrichtung lang gestreckten Schienenkörper (10) aufweist, an dessen einer Querseite ein zylindrischer Führungsabschnitt (11) vorgesehen ist, der über einen Stegabschnitt der Schiene mit dem Schienenkörper (10) verbunden ist, und wobei der Schlitten (20) einen Schlittenkörper aufweist, in dem eine zu dem Führungsabschnitt (11) korrespondierende zylindrischen Durchführung (22) zur Aufnahme des Führungsabschnitts (11) vorgesehen ist, wobei der Schlittenkörper einen mit der Durchführung (22) verbundenen, zu dem Stegabschnitt (13) korrespondierenden Längsschlitz (26) zur Aufnahme des Stegabschnitts (13) aufweist, wobei die Innenseite der Durchführung (22), mit der in einem Betriebszustand der Gleitlageranordnung der Schlitten (20) in Längsrichtung gleitend an dem Führungsabschnitt (11) anliegt, durch ein Gleitelement aus einem Gleitwerkstoff ausgebildet ist,
**dadurch gekennzeichnet, dass**
der gesamte Schlitten (20) umfassend den Schlittenkörper und das Gleitelement als einstückiges Schlittenteil aus Kunststoff hergestellt ist, wobei zumindest die Innenseite der Durchführung (22) durch ein Tribopolymer gebildet ist, und wobei insbesondere mindestens 80 vol. % des Schlittenteils mit einer Faserverstärkung versehen ist.

2. Gleitlageranordnung (1) nach Anspruch 1,
**dadurch gekennzeichnet, dass**
der ganze Schlitten einstückig aus einem Tribopolymer hergestellt ist.

3. Gleitlageranordnung (1) nach einem der vorangehenden Ansprüche,
**dadurch gekennzeichnet, dass**
der Bereich des Schlittenkörpers (24) einen höheren Anteil an Fasern aufweist als der Bereich des Gleitelements (25).

4. Gleitlageranordnung (1) nach einem der vorangehenden Ansprüche,
**dadurch gekennzeichnet, dass**
an den beiden Querseiten des Schienenkörpers (10) jeweils ein zylindrische Führungsabschnitt (11) vorgesehen ist, wobei die Anordnung zwei Schlitten (20) mit je einer Durchführung (22) oder einen Schlitten (20) mit zwei Durchführungen (22) umfasst, wobei die Führungsabschnitte (11) in den Durchführungen (22) aufgenommen sind.

5. Gleitlageranordnung (1) nach einem der vorangehenden Ansprüche,
**dadurch gekennzeichnet, dass**
die Innenseiten der Durchführung (22) mit Längsnuten versehen sind.

6. Gleitlageranordnung (1) nach einem der vorangehenden Ansprüche,
**dadurch gekennzeichnet, dass**
die zylindrische Durchführung (22) den Führungsabschnitt (11) zu mindestens drei Viertel ihres Umfangs umschließt.

7. Gleitlageranordnung (1) nach einem der vorangehenden Ansprüche,
**dadurch gekennzeichnet, dass**
der Führungsabschnitt (11), insbesondere die gesamte Schiene, aus einem Metall oder einer Metalllegierung, insbesondere aus Aluminium oder seinen Legierungen, Titan oder seinen Legierungen, Magnesium oder seinen Legierungen oder Edelstahl hergestellt ist.

8. Schlitten (20) für eine Gleitlageranordnung (1) nach einem der vorangehenden Ansprüche,
**dadurch gekennzeichnet, dass**
der Schlitten (20) als einstückiges Schlittenteil aus Kunststoff hergestellt ist und in sich integriert einen Schlittenkörper und ein aus einem Gleitwerkstoff hergestelltes Gleitelement umfasst, wobei in dem Schlittenkörper eine zu einem zylindrischen Führungsabschnitt (11) einer Schiene, die ferner einen Schienenkörper (10) umfasst, der über einen Stegabschnitt (13) mit dem Führungsabschnitt (11) verbunden ist, korrespondierende zylindrischen Durchführung (22) zur Aufnahme des Führungsabschnitts (11) vorgesehen ist, wobei der Schlittenkörper einen mit der Durchführung (22) verbundenen, zu dem Stegabschnitt (13) korrespondierenden Längsschlitz (26) zur Aufnahme des Stegabschnitts (13) aufweist und die Innenseite der Durchführung (22), mit der in einem Betriebszustand der Gleitlageranordnung (1) der Schlitten (20) in Längsrichtung gleitend an dem Führungsabschnitt (11) anliegt, durch das Gleitelement ausgebildet ist, wobei zumindest die Innenseite der Durchführung (22) durch ein Tribopolymer gebildet ist und/oder mindestens 80 vol. % des Schlittenteils mit einer Faserverstärkung versehen ist.

9. Schlitten (20) nach Anspruch 8,
**dadurch gekennzeichnet, dass**
der Schlitten (20) eine Breite von 20 mm bis 40 mm, eine Länge von 20 mm bis 50 mm und eine Höhe von 10 mm bis 25 mm aufweist und weniger als 20 g, insbesondere weniger als 15 g, wiegt und in zumindest einer Belastungsrichtung eine statische Tragfähigkeit von mindestens 20 N aufweist.

10. Verfahren zur Herstellung eines Schlittens (20) für die Gleitlageranordnung (1) nach einem der vorangehenden Ansprüche 1 bis 7,
**dadurch gekennzeichnet, dass**
zur Herstellung des Schlittens umfassend den Schlittenkörper und das Gleitelement als einstückiges Schlittenteil als Komponenten ein Basiskunststoff, Feststoffschmiermittel und/oder Schmiermittel und insbesondere Fasern gemischt und in eine Spritzgussform injiziert und abgekühlt werden, wonach das Schlittenteil als fertiger Formkörper entnommen wird.

11. Verfahren zur Herstellung eines Schlittens (20) umfassend den Schlittenkörper und das Gleitelement als einstückiges Schlittenteil für die Gleitlageranordnung (1) nach einem der vorangehenden Ansprüche 1 bis 7,
**dadurch gekennzeichnet, dass**
Komponenten in einem Mehrkomponenten-Spritzgussverfahren so verarbeitet werden, dass die Feststoffschmiermittel oder die Schmiermittel oder die Feststoffschmiermittel und die Schmiermittel an der Innenseite der Durchführung (22) angereichert sind und die Fasern im Schlittenkörper außerhalb der Innenseite der Durchführung (22) angereichert sind.

## Claims

1. Slide bearing arrangement (1) comprising a rail and a carriage (20), wherein the rail has a rail body (10) elongated in a longitudinal direction, on one transverse side of which a cylindrical guide section (11) is provided which is connected to the rail body (10) via a web section of the rail, wherein the carriage (20) has a carriage body in which a cylindrical passage (22) corresponding to the guide section (11) is provided for receiving the guide section (11), wherein the carriage body has a longitudinal slot (26) connected to the passage (22) and corresponding to the web section (13) for receiving the web section (13), wherein the inner side of the passage (22), with which the carriage (20) slidingly contacts the guide section (11) in the longitudinal direction in an operating state of the slide bearing arrangement, is formed by a sliding element made of a sliding material,
**characterized in that**
the entire carriage (20), comprising the carriage body and the sliding element, is manufactured as a one-piece carriage part from plastic, wherein at least the inner side of the passage (22) is formed by a tribopolymer and wherein, in particular, at least 80 % by volume of the carriage part are provided with fiber reinforcement.

2. Slide bearing arrangement (1) according to claim 1,
**characterized in that**
the entire carriage is made in one piece from a tribopolymer.

3. Slide bearing arrangement (1) according to any one of the preceding claims,
**characterized in that**
the part of the carriage body (24) has a higher proportion of fibers than the part of the sliding element (25).

4. Slide bearing arrangement (1) according to any one of the preceding claims,
**characterized in that**
a cylindrical guide section (11) is provided on each of the two transverse sides of the rail body (10), wherein the arrangement comprises two carriages (20) each with one passage (22) or one carriage (20) with two passages (22), wherein the guide sections (11) are received in the passages (22).

5. Slide bearing arrangement (1) according to any one of the preceding claims,
**characterized in that**
the inner sides of the passage (22) are provided with longitudinal grooves.

6. Slide bearing arrangement (1) according to any one of the preceding claims,
**characterized in that**
the cylindrical passage (22) surrounds the guide section (11) at least three quarters of its circumference.

7. Slide bearing arrangement (1) according to any one of the preceding claims,
**characterized in that**
the guide section (11), in particular the entire rail, is made of a metal or a metal alloy, in particular aluminum or its alloys, titanium or its alloys, magnesium or its alloys or stainless steel.

8. Carriage (20) for a slide bearing arrangement (1) according to any one of the preceding claims,
**characterized in that**
the carriage (20) is made as a one-piece carriage part from plastic and has integrated therein a carriage body and a sliding element made from a sliding material, wherein a cylindrical passage (22) which corresponds to a cylindrical guide section (11) of a rail that further comprises a rail body (10) that is connected to the guide section (11) via a web section (13) is provided in the carriage body for receiving the guide section (11), wherein the carriage body has a longitudinal slot (26) connected to the passage (22) and corresponding to the web section (13) for receiving the web section (13), and the inner side of the passage (22) with which the carriage (20) slidingly contacts with the guide section (11) in the longitudinal direction in an operating state of the slide bearing arrangement (1) is formed by the sliding element, wherein at least the inner side of the passage (22) is formed by a tribopolymer and/or at least 80 % by volume of the carriage part are provided with fiber reinforcement.

9. Carriage (20) according to claim 8,
**characterized in that**
the carriage (20) has a width of 20 mm to 40 mm, a length of 20 mm to 50 mm and a height of 10 mm to 25 mm and weighs less than 20 g, in particular less than 15 g, and has a static load capacity of at least 20 N in at least one load direction.

10. Method for manufacturing a carriage (20) for the slide bearing arrangement (1) according to any one of the preceding claims 1 to 7,
**characterized in that**
for manufacturing the carriage, which comprises the carriage body and the sliding element as a one-piece carriage part, a base plastic, solid lubricant and/or lubricant and, in particular, fibers are mixed and injected as components into an injection mold and cooled, whereupon the slide part is removed as a finished molded body.

11. Method for manufacturing a carriage (20) comprising the carriage body and the sliding element as a one-piece carriage part for the slide bearing arrangement (1) according to any one of the preceding claims 1 to 7,
**characterized in that**
components are processed in a multi-component injection molding process in such a way that the solid lubricants or the lubricants or the solid lubricants and the lubricants are concentrated on the inside of the passage (22) and the fibers in the carriage body are concentrated outside the inside of the passage (22).

## Revendications

1. Agencement de palier lisse (1) comprenant un rail et un chariot (20), le rail présentant un corps de rail (10) allongé dans une direction longitudinale, sur un côté transversal duquel est prévue une partie de guidage cylindrique (11) qui est reliée au corps de rail (10) par l'intermédiaire d'une partie de traverse du rail, et le chariot (20) présentant un corps de chariot dans lequel est prévu un passage cylindrique (22) correspondant à la partie de guidage (11) pour recevoir la partie de guidage (11), le corps de chariot comportant une fente longitudinale (26) reliée au passage (22) et correspondant à la partie de traverse (13) pour recevoir la partie de traverse (13), la face intérieure du passage (22) qui, dans un état de fonctionnement de l'agencement de palier lisse, est en appui coulissant dans le sens longitudinal contre la partie de guidage (11) du chariot (20), étant formée par un élément coulissant en un matériau coulissant,
**caractérisé en ce que**
l'ensemble du chariot (20) comprenant le corps de chariot et l'élément coulissant est fabriqué d'une seule pièce en matière plastique, au moins la face intérieure du passage (22) étant formée par un tribopolymère, et, en particulier, au moins 80 % en volume de la partie chariot étant pourvue d'un renforcement par fibres.

2. Agencement de palier lisse (1) selon la revendication 1,
**caractérisé en ce que**
l'ensemble du chariot est fabriqué d'une seule pièce en un tribopolymère.

3. Agencement de palier lisse (1) selon l'une quelconque des revendications précédentes,
**caractérisé en ce que**
la partie du corps de chariot (24) présente une proportion de fibres plus élevée que la partie de l'élément coulissant (25).

4. Dispositif de palier lisse (1) selon l'une quelconque des revendications précédentes,
**caractérisé en ce que**
une partie de guidage cylindrique (11) est prévue sur chacun des deux côtés transversaux du corps de rail (10), l'agencement comprenant deux chariots (20) avec chacun un passage (22) ou un chariot (20) avec deux passages (22), les parties de guidage (11) étant logées dans les passages (22).

5. Agencement de palier lisse (1) selon l'une quelconque des revendications précédentes,
**caractérisé en ce que**
les faces intérieures du passage (22) sont pourvues de rainures longitudinales.

6. Agencement de palier lisse (1) selon l'une quelconque des revendications précédentes,
**caractérisé en ce que**
le passage cylindrique (22) entoure la partie de guidage (11) sur au moins les trois quarts de sa circonférence.

7. Agencement de palier lisse (1) selon l'une quelconque des revendications précédentes,
**caractérisé en ce que**
la partie de guidage (11), en particulier l'ensemble du rail, est fabriquée en un métal ou un alliage métallique, en particulier en aluminium ou ses alliages, en titane ou ses alliages, en magnésium ou ses alliages ou en acier inoxydable.

8. Chariot (20) pour un agencement de palier lisse (1) selon l'une quelconque des revendications précédentes,
**caractérisé en ce que**
le chariot (20) est fabriqué en une seule pièce en matière plastique et comprend de manière intégré dans celui-ci un corps de chariot et un élément coulissant fabriqué à partir d'un matériau coulissant, dans lequel, dans le corps de chariot, un passage cylindrique correspondant à une partie de guidage cylindrique (11) d'un rail, qui comprend en outre un corps de rail (10) relié à la partie de guidage (11) par l'intermédiaire d'une partie de traverse (13), est prévu pour recevoir la partie de guidage (11), le corps de chariot présentant une fente longitudinale (26) reliée au passage (22) et correspondant à la partie de traverse (13) pour recevoir la partie de traverse (13), et le côté intérieur du passage (22), par lequel le chariot (20) s'applique de manière coulissante dans la direction longitudinale contre la partie de guidage (11) dans un état de fonctionnement de l'agencement de palier lisse (1), étant formé par l'élément coulissant, au moins la face intérieure du passage (22) étant formée par un tribopolymère et/ou au moins 80 % en volume de la partie de chariot étant pourvue d'un renforcement par fibres.

9. Chariot (20) selon la revendication 8,
**Caractérisé en ce que**
le chariot (20) présente une largeur de 20 mm à 40 mm, une longueur de 20 mm à 50 mm et une hauteur de 10 mm à 25 mm et pèse moins de 20 g, en particulier moins de 15 g, et présente une capacité de charge statique d'au moins 20 N dans au moins une direction de charge.

10. Procédé de fabrication d'un chariot (20) pour l'agencement de palier lisse (1) selon l'une quelconque des revendications précédentes 1 à 7,
**caractérisé en ce que**,
pour fabriquer le chariot qui comprend le corps de chariot et l'élément coulissant en tant que pièce de chariot monobloc, un plastique de base, un lubrifiant solide et/ou un lubrifiant et en particulier des fibres comme composants sont mélangés et injectés dans un moule d'injection et refroidis, après quoi la pièce de chariot est retirée en tant que corps moulé fini.

11. Procédé de fabrication d'un chariot (20) comprenant le corps de chariot et l'élément coulissant sous forme en tant que pièce de chariot monobloc pour l'agencement de palier lisse (1) selon l'une quelconque des revendications 1 à 7 précédentes,
**caractérisé en ce que**
les composants sont traités dans un procédé de moulage par injection à plusieurs composants de telle sorte que les lubrifiants solides ou les lubrifiants ou les lubrifiants solides et les lubrifiants sont concentrés sur la face intérieure du passage (22) et que les fibres dans le corps de chariot sont concentrées à l'extérieur de la face intérieure du passage (22).
